# EUROPEAN PATENT SPECIFICATION

(11) **EP 3 321 223 B1**
(45) Date of publication and mention of the grant of the patent: **20.01.2021**
(21) Application number: 16823924.2
(22) Date of filing: 07.07.2016
(51) Int. Cl.: B66B 5/14, G01G 19/18, B66B 1/34, E04F 10/06

(54) **LOAD CELL**
KRAFTMESSZELLE
CELLULE DE MESURE

(30) Priority: 10.07.2015 ES 201531016
(43) Date of publication of application: 16.05.2018
(73) Proprietor: Dinacell Electronica, S.L., 28522 Rivas Vaciamadrid Madrid (ES)
(72) Inventor: GONZÁLEZ GALLEGOS, Rafael, 28522 Madrid (ES)
(74) Representative: Elzaburu S.L.P.
(86) International application number: PCT/ES2016/070513
(87) International publication number: WO 2017/009504

(56) References cited:
- JP-U- S5 692 833
- US-A1- 2005 087 404
- US-A1- 2005 087 404

## Description

### Subject

The present invention relates to a load cell for measuring the load of a supporting cable of a lifting device.

### State of the art

It is known that a lifting device uses a cable suspension arrangement, whereby the support and ascending and descending movements of the car are carried out. The car load is transmitted to the cables of the installation, thereby exerting a force on the cables that is proportional to the weight of the car; said cables must be adjusted with very precise tensions and maintenance of the conditions of the installation must be rigorously controlled, due to the critical function of the support and the risk posed by loosening or deterioration of the cables.

The lifting device is equipped with one or several load cells for measuring the tension in the supporting cables. The loads that must be borne by the supporting cables in real operation fluctuate due to the operation itself, friction, changes in the settings, coupling of mechanisms and other.

The load cell comprises, but is not limited to, strain gauges for performing weight measurements. Strain gauges measure the degree of deformation of the load cell caused by the load.

The cell load measures or weighs the load in the lifting device, by measuring the forces on the cables, the supporting ropes or the structure before the device starts, in order to prevent movements that exceed the maximum or established limit for the lifting device.

The distribution of the load inside the lifting device, whose weight is being measured, tends to or may lurch with respect to the means for fixing the load cell to the structure of the lifting device, thereby transmitting a wedging effect to the load cell. That is, the lifting device lurches or has a potential risk of lurching with respect to the support of the load cell, giving rise to additional overloads in the suspension elements, which may cause malfunction, inconveniences or even damage to the mechanisms of the lifting device.

Document JPs5692833U describes a load cell comprises a first detection spring that is compressed by the load applied to a lifting device. The load cell comprises a second detector that detects when the detection spring is extended. The first detector spring can be moved forward and backward to a support structure of the lifting device. A first body of the load cell is attached between the top end of the first detector spring and a bottom end of a second body of the load cell that can be freely moved back and forth too.

Document US2005087404 discloses a measuring device for measuring the load of an elevator suspended by a tension member within a termination at one end of the tension member, a mounting plate for attaching the termination relative the hoistway, and a hitch for attaching the termination to the mounting plate further including load cell positioned between the hitch and the mounting plate wherein the load cell generates a signal proportional to the load of the elevator.

### Summary

The present invention seeks to resolve one or more of the drawbacks expounded above by means of a load cell as that defined in the claims.

One aspect is to supply a load cell for weighing in a lifting device that comprises a first body, which includes means for measuring the deformation of said cell when the same load cell is subjected to compressive stresses; and a second body mechanically joined by means of a male-female ball-and-socket joint; i.e. one end of the first body comprises a concave or convex seat that serves as a housing for a convex or concave protuberance located at the corresponding end of the second body.

The male-female ball-and-socket joint allows the load cell, once it is assembled in the working position, to become self-aligned by executing multi-directional alignment movements, in order to prevent transmitting static wedging stresses to the load cell due to misalignments in the assembly of the cell or which may occur when the lifting device displaces its load vertically.

The load cell has a longer useful life as its resistance against all types of stresses increases, eliminating any fatigue-related problem that may be caused by flexion of the load cell. It is more resistant to overloads caused by car or platform wedging, in addition to those that take place during the start and acceleration of the lifting device.

Consequently, the load cell is subjected to compressive stresses only. This entails an increase in the safety of the load cell without the need for an exaggerated increase in the size of the load cell for large loads.

The load cell has a column configuration between the ends farthest from the first body and the second body.

The means for measuring the deformation of said cell comprise at least one deformation sensor or, where applicable, a strain gauge placed on the first body, in order to better detect the deformation of the load cell upon depositing a load on the lifting device, including the weight or tare of the lifting car or platform.

The load cell is manufactured from materials with high mechanical resistance and can be placed on the ties of the supporting cables or ropes, in order to enable the individual measurement and control of each tie.

### Brief description of the figures

A more detailed explanation of the device according to embodiments of the invention is given in the following description based on the attached figures, wherein:
Figure 1 shows a perspective view of a first body and a second body of a load cell for measuring the tension in a supporting cable of a lifting device;
Figure 2 shows an elevational view of a cross-section of the load cell; and
Figure 3 shows an elevational view of a section of different types of male-female ball-and-socket joints for the load cells.

### Description

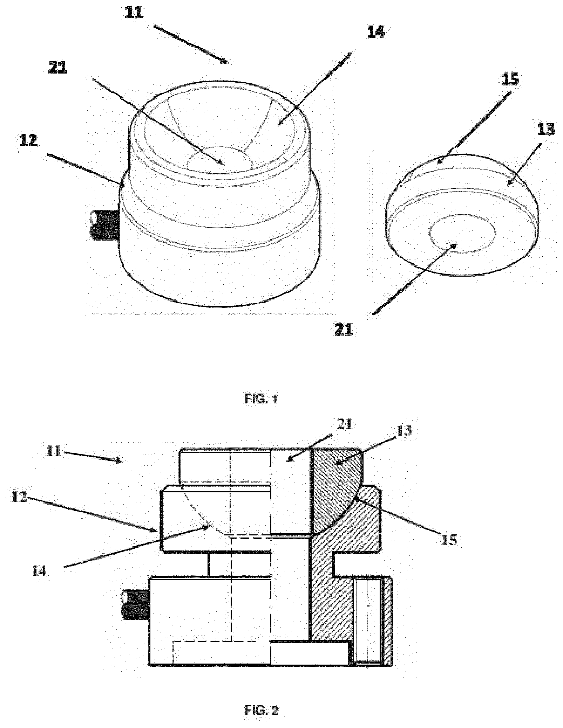

In relation to figures 1 and 2, which show a load cell 11 for measuring the tension in each supporting cable of a lifting device.

The supporting cable is mechanically coupled to a traction unit, such that the load cell is subjected to compression, thereby bearing the stress of the supporting cable in order to provide a direct measurement of the tension in the cable.

Male-female ball-and-socket joint. This system for joining sections by means of an articulated ball makes it possible to absorb misalignments between two adjacent surfaces, thereby preventing significant torque loads.

The load cell 11 comprises a first body 12, which includes means for measuring the deformation of said cell when that load cell 11 is subjected to compressive stresses; and a second body 13 in mechanical contact with a support structure, which co-operate mechanically with a terminal end of the supporting cable of the lifting device, such that the supporting cable extends along a passthrough cylindrical cavity 21 defined along the axis of revolution of the load cell 11, wherein the supporting cable penetrates the cell 11 in its entirety, as shown in figure 2. Consequently, the supporting cable penetrates both the first body 12 and the second body 13 of the load cell 11; thus, both the first and the second body 12, 13 are mechanically coupled upon being a male-female ball-and-socket type joint that is subjected to compression; i.e. one end of the first body 12 comprises a concave seat 14 that serves as a housing for a convex protuberance 15 located at the corresponding end of the second body, or, vice versa, the end of the first body 12 is convex and the end of the second body has the corresponding concave shape.

The terminal end of the supporting cable projects from the flat upper side of the second body 13. The flat lower side of the first body 12 is in physical contact with a flat fixed surface of the support structure, such that, under compressive stress, the second body 13 of the load cell 11 tends to move towards the flat fixed surface of the support structure. The male-female ball-and-socket joint between the first body 12 and the second body 13 uniformly distributes the load and the compressive stress on the load cell, the first body 12 being compressed between the second body 13 and the flat fixed surface of the support structure. Deformation means, included in the load cell (11), measure the compression to which the first body 12 of the cell 11 is subjected.

The convex protuberance 15 emerges from the end of the second body 13 to mechanically couple to the concave seat 14 of the corresponding end of the first body 12, in order to provide certain lateral mobility to the load cell 11 and, consequently, prevent alignment errors or misalignment or lurching in the load cell 11, thereby preventing the transmission of wedging stresses.

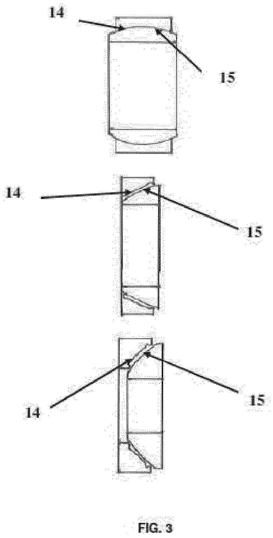

In relation to figure 3, the male-female ball-and-socket joint may be of the radial ball-and-socket type or of the axial ball-and-socket joint type, having a spherical surface in the protuberance 15 and a hollow and equally spherical surface on the seat 14.

The load cell 11 as a whole has a parallelepiped or elongated cylinder shape, and is made of a material with high mechanical resistance.

The load cell 11 is capable of detecting the deformation caused by a compression force exerted thereon and generating, in accordance with said force, a signal that may be transmitted to a data control and processing centre, which includes a data processing unit, to provide a value equivalent to the force detected.

Therefore, the load cell 11 constantly measures the force of the tension in the cable in a direct manner, making it possible to precisely regulate and control said tension, while also indicating the behaviour of the supporting cable tie when the load cell 11 is located on the cable tie itself.

In the case of ties that include a damper spring, as is usually the case of supporting cable ties of lifting devices, the load cell 11 can be placed between the spring whereon the supporting cable is supported and the support structure, such that the tensile strength of the cable is applied to the spring and the spring transmits it to the load cell 11.

The configuration of the load cell 11 enables much higher resistance than other types of cells at considerable loads. This is due to the geometry itself and to the fact that the load cell 11 has certain lateral mobility to prevent the wedging stresses, misalignments or lurches that may cause overloads and material fatigue. This fatigue can cause the cell 11 to break, which is particularly dangerous.

An overload may give rise to deformations in the load cell 11 and, consequently, erroneous load measurements. The selection of materials with high resistance and the aforementioned geometry for manufacturing the load cell minimises this risk.

## Claims

1. A load cell for measuring the tension in a supporting cable of a lifting device, wherein the load cell (11) comprises a first body (12) mechanically contactable with a support structure of the lifting device; **characterised in that**, the first body (12) includes means for measuring the deformation exerted by a second body (13) of the cell (11), wherein one end of the first body (12) and the corresponding end of the second body (13) are mechanically joined by means of a male-female ball-and-socket type joint.

2. Cell, according to claim 1, wherein one end of the first body (12) comprises a concave seat (14) that serves as housing for a convex protuberance (15) located at the corresponding end of the second body (13).

3. Cell, according to claim 1, wherein one end of the first body (12) comprises a convex seat (14) that serves as housing for a concave protuberance (15) located at the corresponding end of the second body (13).

4. Cell, according to claim 1, wherein the male-female ball-and-socket joint is of the radial ball-and-socket joint type or the axial ball-and-socket joint type.

5. The cell, according to anyone of the preceding claims, wherein the load cell (11) is configured to be installed between a spring whereon the supporting cable rests and a support structure of the lifting device.

## Patentansprüche

1. Kraftmessdose zum Messen der Spannung in einem Tragkabel einer Hubvorrichtung, wobei die Kraftmessdose (11) einen ersten Körper (12) umfasst, der mechanisch mit einer Tragstruktur der Hubvorrichtung kontaktierbar ist; **dadurch gekennzeichnet, dass** der erste Körper (12) Mittel zum Messen der Verformung, die von einem zweiten Körper (13) der Zelle (11) ausgeübt wird, beinhaltet, wobei ein Ende des ersten Körpers (12) und das entsprechende Ende des zweiten Körpers (13) mechanisch mittels eines Stecker-Buchse-Kugelgelenks verbunden sind.

2. Messdose nach Anspruch 1, wobei ein Ende des ersten Körpers (12) einen konkaven Sitz (14) umfasst, der als Gehäuse für einen konvexen Vorsprung (15), der sich an dem entsprechenden Ende des zweiten Körpers (13) befindet, dient.

3. Messdose nach Anspruch 1, wobei ein Ende des ersten Körpers (12) einen konvexen Sitz (14) umfasst, der als Gehäuse für einen konkaven Vorsprung (15), der sich an dem entsprechenden Ende des zweiten Körpers (13) befindet, dient.

4. Messdose nach Anspruch 1, wobei das Stecker-Buchse-Kugelgelenk vom Typ des radialen Kugelgelenks oder des axialen Kugelgelenks ist.

5. Messdose nach einem der vorstehenden Ansprüche, wobei die Kraftmessdose (11) dazu konfiguriert ist, zwischen einer Feder, auf der das Tragkabel ruht, und einer Tragstruktur der Hubvorrichtung installiert zu sein.

## Revendications

1. Cellule de charge pour mesurer la tension dans un câble porteur d'un dispositif de levage, dans laquelle
la cellule de charge (11) comprend un premier corps (12) pouvant être mis en contact mécaniquement avec une structure de support du dispositif de levage ; **caractérisée en ce que**,
le premier corps (12) inclut des moyens de mesure de la déformation exercée par un second corps (13) de la cellule (11), dans laquelle une extrémité du premier corps (12) et l'extrémité correspondante du second corps (13) sont jointes mécaniquement au moyen d'un joint de type à rotule mâle-femelle.

2. Cellule, selon la revendication 1, dans laquelle une extrémité du premier corps (12) comprend une embase concave (14) qui sert de logement pour une protubérance convexe (15) située au niveau de l'extrémité correspondante du second corps (13).

3. Cellule, selon la revendication 1, dans laquelle une extrémité du premier corps (12) comprend une embase convexe (14) qui sert de logement pour une protubérance concave (15) située au niveau de l'extrémité correspondante du second corps (13).

4. Cellule, selon la revendication 1, dans laquelle le joint à rotule mâle-femelle est du type joint à rotule radial ou du type joint à rotule axial.

5. Cellule, selon l'une quelconque des revendications précédentes, dans laquelle la cellule de charge (11) est configurée pour être installée entre un ressort sur lequel repose le câble porteur et une structure de support du dispositif de levage.
